# EUROPEAN PATENT APPLICATION

(11) **EP 2 562 961 A1**
(43) Date of publication of application: **27.02.2013**
(21) Application number: 11250741.3
(22) Date of filing: 25.08.2011
(51) Int. Cl.: H04L 12/24, H04M 1/725

(54) **Smart card and method of operation thereof**

(71) Applicant: Telnic Limited, London W1T 2DJ (GB)
(72) Inventor: Hayward, Justin Kenneth, London, W1T 2DJ (GB)
(74) Representative: Brinck, David John Borchardt

(57) **Abstract**

There is discussed a smart card comprising data memory, one or more processors operable to execute programs stored in the data memory, and an interface for receiving data from and transmitting data to a host device. The data memory stores a subscriber identification module for authenticating a subscriber of a wireless communications network. In accordance with the invention, the data memory further stores a domain management module operable to generate management signals, either manually or automatically, which i) retrieve information from the resource records from a domain name server or web page data for a domain associated with the subscriber and ii) modify the resource records stored by the domain name server or web page data for the domain associated with the subscriber.

## Description

The present invention is concerned with a smart card which authenticates a subscriber or guest account of a wireless communication network, and is particularly concerned with the interaction of such a smart card to automatically or manually interact or modify zone data stored on a domain name system (DNS) nameserver or html-based content published under a domain name.

Public Land Mobile Networks (PLMNs), such as GSM and 3G wireless networks, use a Universal Integrated Circuit Card (UICC) to identify a subscriber. In particular, the UICC stores a subscriber identity module (SIM), a piece of software that is run by a processor on the UICC and stores information relating to the subscriber associated with the SIM.

The domain name system (DNS) is a fundamental technology of the Internet. It is a global, scalable and distributed database. The DNS enables a web browser to access content stored on a web server by identifying an alpha-numeric or non-ASCII (internationalized domain name or IDN) domain name with the associated Internet Protocol (IP) address (whether an IPv4 address, such as 192.149.252.76, or an IPv6 address, such as 3FFE:F200:0234:AB00:0123:4567:8901:ABCD), which identifies the location of the web server on the World Wide Web, and which is stored as a record within the DNS.. The DNS defines a namespace encapsulating allowable domain names, with the namespace being separated into zones. The DNS includes nameservers which store zone data for one or more zones of the namespace. This zone data includes Resource Records for one or more domains. The Resource Records publish information about a domain in accordance with IETF standards. For example, one type of Resource Record provides the IP address associated with a particular domain name as described above. Another type may provide a location (LOC) record that the domain name owner wishes to associate with that domain.

An owner of a domain or sub-domain may wish to change the information stored in the Resource Records for that domain/sub-domain. Before being allowed to change any of the information, typically some form of authentication of the owner takes place, e.g. the entry of a username and password.

The present invention addresses the problem of retrieving information from Resource Records and modifying the information stored in Resource Records. Aspects of the invention are set out in the accompanying claims.

In an embodiment, the present invention provides a smart card which stores a subscriber identification module for authenticating a subscriber of a wireless communication network and a domain management module which generates management signals to perform at least one of i) retrieving information from the resource records from a domain name server for a domain associated with the subscriber and ii) modifying the resource records stored by the domain name server for the domain associated with the subscriber. By incorporating the domain management module in a smart card, authentication procedures may automatically be performed by the smart card, without the requirement for a web browser and access via the World Wide Web, or the downloading of an application, both of which may have associated cost or compatibility issues. The domain management module may store a private key which is used to sign messages in order to authenticate the origin and integrity of the message.

The domain management module 'pairs' a smart card with a domain. This pairing facilitates the processing of domain data, whether resource records for the paired domain stored by a DNS server or web page data for the paired domain stored by a web server, by taking advantage of the inherent relationship between the smart card and its owner by virtue of the authentication functionality for the wireless communication network.

The smart card may be a Universal Integrated Circuit Card for use with a cellular phone, sometimes called a mobile phone or a "handy" phone, which can be carried about the person of a subscriber to a PLMN. Alternatively, the smart card may be inserted in a car as part of a car phone system, or inserted in a communications system for a building or the like. Whatever the host device or the connection method to the internet, the domain management module may include an interface with a user interface of the host device to allow the user to initiate generation of the management signals. Alternatively, the domain management module may automatically generate management signals.

Various exemplary embodiments of the present invention will now be described with reference to the accompanying figures, in which:
Figure 1 is a schematic representation of a system according to a first embodiment of the invention;
Figure 2 is a schematic block diagram showing the main components of a cellular phone forming part of the system illustrated in Figure 1;
Figure 3 is a schematic block diagram showing the main components of a UICC card forming part of the cellular phone illustrated in Figure 2;
Figure 4 is a schematic block diagram showing the main components of a domain management module stored in the UICC card illustrated in Figure 3;
Figure 5 is a schematic block diagram showing the main components of a domain name server forming part of the system illustrated in Figure 1;
Figure 6 is a schematic block diagram showing the main components of an alternative domain management module; and
Figure 7 is a schematic representation of an alternative embodiment of the invention.

### FIRST EMBODIMENT

### System Overview

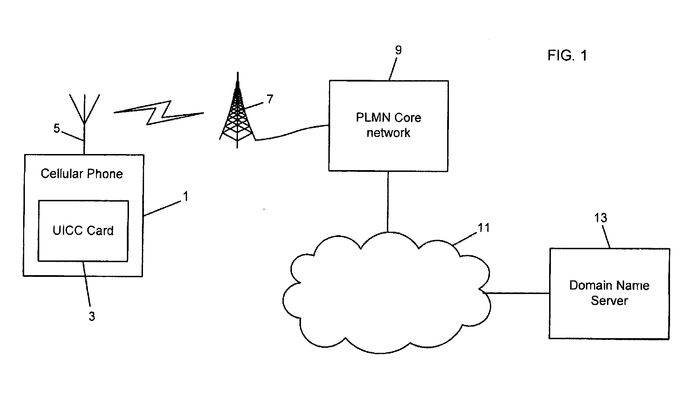

A first embodiment of the invention will now be described with reference to Figures 1 to 5. As shown in Figure 1, in the first embodiment a cellular phone 1 has a UICC card 3 and communicates, via a wireless link between an antenna 5 of the cellular phone 1 and a base station 7, with a core network 9 of a public land mobile network (PLMN). The core network 9 includes, in a conventional manner, a gateway (not shown) which links the core network to the Internet 11. A domain name server 13 is also connected to the Internet 11.

In accordance with the invention, an application on the UICC card 3 interacts with the resource records stored in a zone data file associated with a subscriber to the PLMN. In particular, the application on the UICC card 3 can retrieve information from a resource record or change the data stored by a resource record.

The operation of this system requires no change to the manner in which the PLMN and the Internet works. In other words, the invention is compatible with existing mobile communications and Internet standards. The invention does, however, require a novel UICC card 3, and may also involve novel software applications stored by the cellular phone 1 separately from the UICC card 3.

The cellular phone 1, UICC card 3 and the domain name server 13 will now be described in more detail.

### The Cellular Phone 1

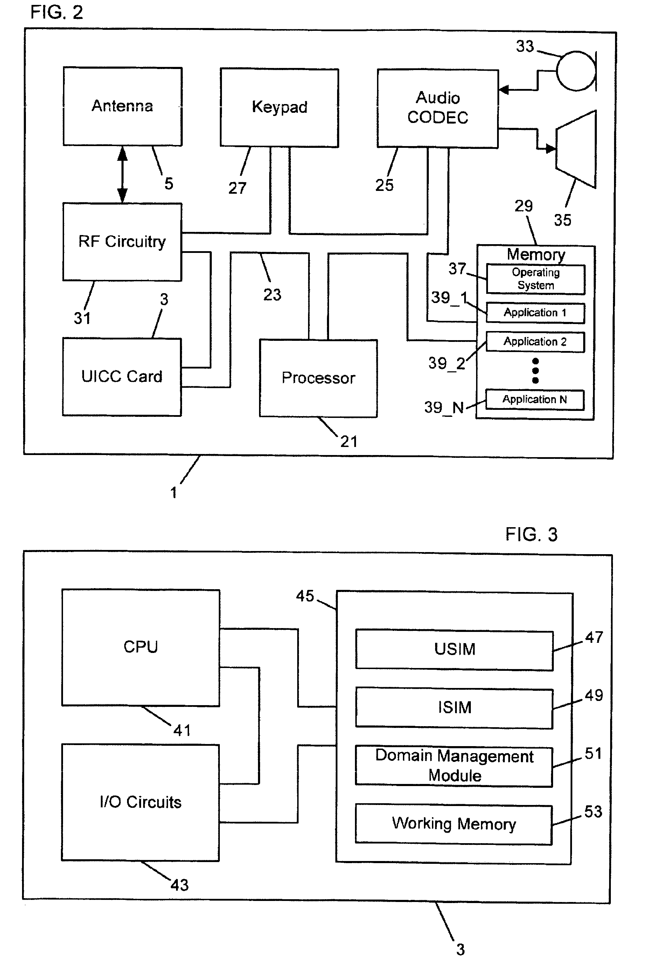

As shown in Figure 2, the cellular phone 1 includes a processor 21 which is interconnected, via a bus system 23, with an audio codec 25, a keypad 27, a memory 29, the UICC card 3 and RF circuitry 31.

The audio codec 25 converts audio signals (i.e. analogue electrical signals corresponding to audible frequencies) generated by a microphone 33 into digital signals for transmission over the bus system 23, and converts digital signals received over the bus system 23 into audio signals for conversion into corresponding acoustic signals by a loudspeaker 35. The keypad 27 allows manual entry of data by the user of the cellular phone 1. The RF circuitry 31 is connected to the antenna 5 and processes RF signals received by the antenna 5 into digital signals for transmission over the bus system 23 and processes digital signals received over the bus system 23 into RF signals for transmission by the antenna 5.

The memory 29 stores software and data relating to the operation of the cellular phone 1, as well as providing working memory. Although schematically represented as a single block in Figure 2, those skilled in the art will appreciate that the memory 29 will typically consist of different memory types, e.g. Read Only Memory (ROM), Electrically-Programmable Read Only Memory (EPROM) and Random Access Memory (RAM), and also with differing access times to allow conventional memory storage and retrieval techniques, e.g. buffering, to be used.

As schematically illustrated in Figure 2, the memory 29 stores an operating system 37 and applications 39_1, 39_2...39_N. The number and variety of applications 39 available for a cellular phone 1 has increased greatly over recent years.

The UICC card 3 is a component provided by an operator of a PLMN, rather than the cellular phone manufacturer. In a conventional manner, the UICC card 3 provides for the authentication of the user of the cellular phone 1 as a subscriber to the PLMN. As will be described hereafter, in accordance with the invention the UICC card 3 also provides for interaction with the resource records stored in a zone datafile associated with that subscriber in the domain name server 13.

### The UICC Card

As shown in Figure 3, the UICC card 3 includes a central processing unit (CPU) 41, input/output (I/O) circuits 43 and memory 45. In this embodiment, the CPU 41 and the I/O circuits 43 for the UICC card 3 are conventional.

The memory 45 stores a UMTS Subscriber Identification Module (USIM) 47, and IMS Subscriber Identification Module (ISIM) 49, a Domain Management Module 51 and working memory 53. In a conventional manner, the USIM 47 and the ISIM 49 respectively provide for subscriber identification with a UMTS PLMN and a IMS PLMN.

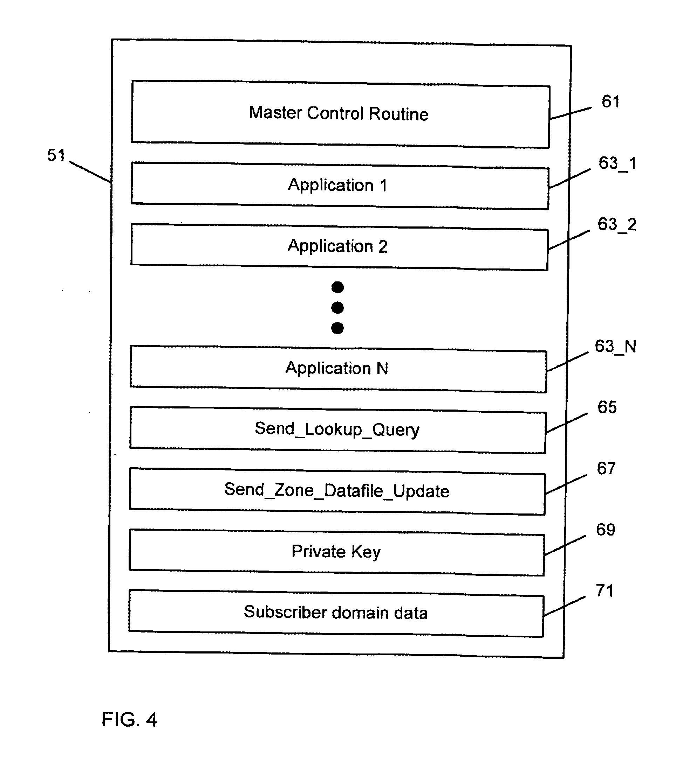

The domain management module 51 is a novel component which allows for the interaction with the zone datafile stored by the domain name server 13. As shown in Figure 4, the domain management module 51 includes a Master Control routine 61, a plurality of Application sub-routines 63_1, 63_2 ... 63_N, a Send_Lookup_Query sub-routine 65, a Send_Zone_Datafile_Update subroutine 67, a private key 69 and subscriber domain data 71. In this embodiment, the domain management module 51 is pre-stored in the UICC card 3 by the operator of the Public Land Mobile Network, but it is envisaged that the domain management module, or data stored by the domain management module (such as the subscriber domain data 71), may also be stored in the UICC 3 by a subscriber.

The Master Control Routine 61 processes various trigger events, and in response to the trigger events initiates execution of one or more of the Application sub-routines 63. Trigger events may be automatically generated, either in response to a change in the operational parameters of the cellular phone 1 or in response to a timing signal, or manually generated, for example in response to an input via the keypad 27 or the microphone 33 (processed using voice recognition). Each Application sub-routine 63 causes one or more interactions with the zone datafile associated with the subscriber to the cellular phone 1 using the Send_Lookup_Query sub-routine 65 to retrieve information from the zone datafile and the Send_Zone_Datafile_Update sub-routine 67, to update a resource record stored by the zone datafile. Examples of Application sub-routines will be given hereafter.

### The Domain Name Server

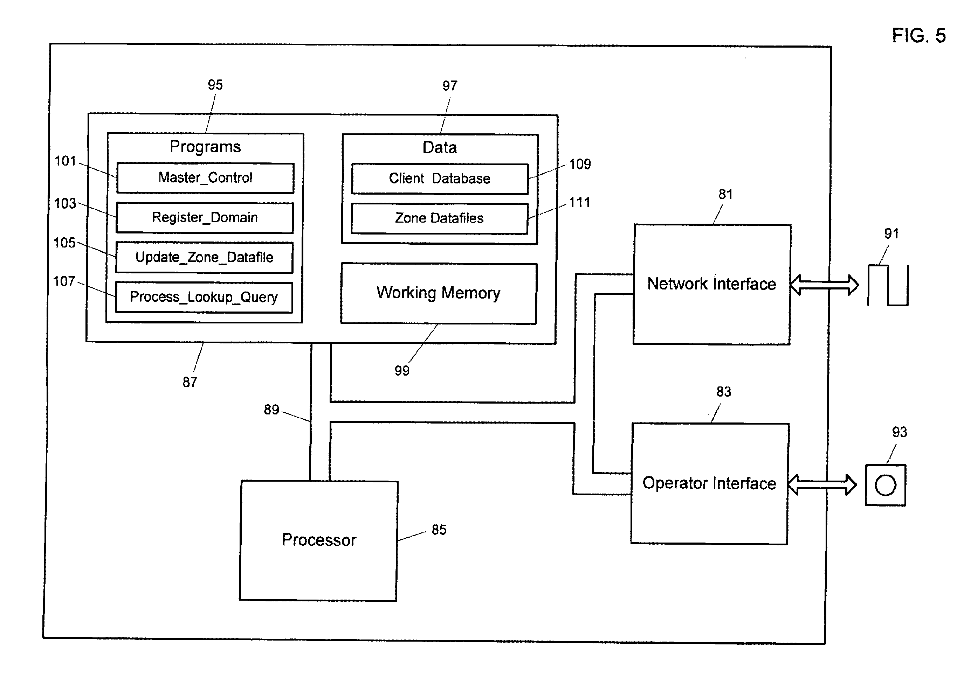

As schematically shown in Figure 5, the domain name server 13 has a network interface 81, an operator interface 83, a processor 85 and memory 87 interconnected by a bus system 89. It will be appreciated that there may be other components present, and also that each of the illustrated components could in practice be implemented by more than one device.

The network interface 81 allows communication of signals 91 between the domain name server 13 and other devices connected to the Internet. In this way, data and/or instructions can be received by the domain name server 13 from a remote networked device, and the domain name server 13 can send data and/or instructions to a remote networked device.

The operator interface 83 allows an operator to input data and/or instructions, and to view or otherwise export data. As such, the operator interface 83 includes human interface devices by which the user can enter data and instructions (such as a keyboard and a mouse device), and a display. In this embodiment, the operator interface 83 further includes a CD-ROM reader/writer which allows the domain name server 13 to input data and instructions stored on a CD-ROM 93.

For ease of explanation, the memory 87 is schematically shown having three regions: a programs region 95, a data region 97 and working memory 99. It will be appreciated that in practice programs and data need not be stored in the memory 87 in such regions. It will also be appreciated that in practice the memory 87 is likely to be constituted by several different memory devices, each having different properties such as access times.

The programs memory region 95 stores routines which are used by the domain name server 13 during operation. In particular, the routines stored in the programs memory region 95 include:
- a Master_Control routine 101 which controls the operation of the domain name server 13;
- a Register_Domain sub-routine 103 which is invoked when setting up a new domain;
- an Update_Zone_Datafile 105 which is invoked when a domain owner registers new data to be stored in the zone datafile;
- a Process_Lookup_Query 107 which is invoked when a request for data stored in a zone datafile is received.

The data memory region 97 stores a client database 109 storing username, domain name and password information for every client. The data memory region 97 also stores the zone datafiles 111 for the registered domains. The format of these zone datafiles will be discussed in more detail hereinafter.

### Exemplary Application 1

In a first exemplary application, the zone datafile stores contact data for the subscriber to the PLMN. This contact data may, for example, be stored as part of a DotTel (.tel) domain, which enables a subscriber to publish contact information such as telephone numbers, email addresses and the like. An exemplary .tel domain may contain the following information:
$TTL 86400
$ORIGIN example.tel.
@ IN SOA bind.nsp-google.dns.tel sysadmin.nsp-google.tel ( 1139418938 ; serial
3h ; refresh
1h ; retry
1w; expire
1h) ; minimum
IN NS bind.nsp-google.dns.tel.
@ IN A 172.16.30.13
; End user content follows
60 IN NAPTR 100 50 "u" "E2U+voice:tel+x-work" "!^.*!tel:+441234567890!"
60 IN NAPTR 100 51 "u" "E2U+voice:tel+x-mobile" "!^.*!tel:+447979797979!"
60 IN NAPTR 100 51 "u" "E2U+sms:tel" "!^.*!tel:+447979797979!"
60 IN NAPTR 100 52 "u" "E2U+fax:tel" "!^.*$!tel:+441234567891!!"
60 IN NAPTR 100 53 "u" "E2U+email:mailto"
"!^.*$!mailto:alice@wonderland.co.uk!"
IN TXT "unrelated text record"
; End user keywords follow
IN TXT "2356765" "first-name" "Alice"
IN TXT "2356765" "business" "ABC Limited"
IN TXT "2356765" "business-address" "123" "New Road" "" "" "Anytown" ""
"X10" "1AB"

Under certain circumstances, a subscriber may wish to change the contact information. For example, the subscriber may wish to publish one office telephone number when that subscriber is in one country and a different office telephone number when that subscriber is in a different country. The office telephone number is stored in the resource record:
60 IN NAPTR 100 50 "u" "E2U+voice:tel+x-work" "!^.*!tel:+441234567890!"

As those skilled in the art will appreciate, a PLMN is identified by a Mobile Country Code (MCC) and a Mobile Network Code (MNC). In this exemplary application, the Master Control Routine 61 in the domain management module 61 monitors the MCC on connection to a PLMN, and if the MCC indicates a change in country then the Master Control Routine triggers an Application 63 which initiates a Zone Datafile Update using the Send_Zone_Datafile_Update sub-routine 67. In particular, the application 63 retrieves an office telephone number corresponding to the new MCC from a database, and instructs the Send_Zone_Datafile_Update sub-routine 67 to generate a message for updating the zone datafile with the retrieved office telephone number, this message being signed with a digital signature generated using the private key 69 to verify authenticity and integrity. On receipt of the message, the domain name server 13 initiates the Update_Zone_Datafile sub-routine 105, which checks the digital signature and, if the digital signature is correct, updates the resource record for the office telephone number with the new office telephone number.

### Exemplary Application 2

In a second exemplary application, one or more of the applications 39 stored by the memory 29 of the cellular phone 1 use the domain management module 51 to retrieve automatically information about the subscriber to the PLMN during a configuration process. In this exemplary illustration, the application 39 requires an email address for the owner of the cellular phone 1. The application 39 sends a query to the domain management module 51, and this query triggers the execution of an application 63 which sends, using the Send_Lookup_Query subroutine 65, a look-up query to a .tel domain for the subscriber requesting an email address. On receipt of the look-up query, the domain name server 13 retrieves the email address from the corresponding resource record, and sends the email address to the domain management module 51. The email address returned by the .tel domain is then passed by the application 63 within the domain management module 51 to the application 39 stored by the cellular phone 1.

### Exemplary Application 3

In a third exemplary application, one of the applications 39 stored by the memory 29 of the cellular phone 1 is an autoconfiguration sub-routine for the cellular phone 1. This autoconfiguration sub-routine 39 uses the domain management module 51 to query the .tel domain for the subscriber to identify communication applications used by that subscriber, and then automatically downloads those applications from the Internet and configures them using data retrieved from the zone datafile. Examples of communication applications which may be used by a subscriber include Skype, AOL Instant Messenger (AIM) and MSN.

In particular, an application 63 in the domain management module 51 sends, using the Send_Lookup_Query subroutine, a look-up query to the domain name server 13 requesting details of the data stored in all NAPTR records. The data sent in return by the domain name server 13 is passed by the domain management module 51 to the autoconfiguration sub-routine 39, which processes the data to determine the communication applications. The autoconfiguration sub-routine 39 then retrieves the identified communication applications via the Internet, and installs the retrieved communication applications.

### Exemplary Application 4

In a fourth embodiment, one of the applications stored by the memory 29 of the cellular phone 1 is a user interface for a web content management system (WCMS) for managing content published on a web page stored in a web server connected to the Internet. In use, the WCMS user interface 39 uses the domain management module 51 on the UICC card 3 to send a DNS query in order to retrieve connection information for connecting the WCMS user interface to manage the content of a web server. It would then enable the automatic or manual editing or publishing of text or rich content to that web server, pairing either with other applications on that device or utilizing an integrated editing and uploading interface.

### SECOND EMBODIMENT

In the first embodiment, the domain management module 51 sends DNS queries to retrieve data from a zone datafile. Those skilled in the art will appreciate that those queries are routed to a resolver, which either retrieves the information from data already cached by the resolver or sends a query to a nameserver.

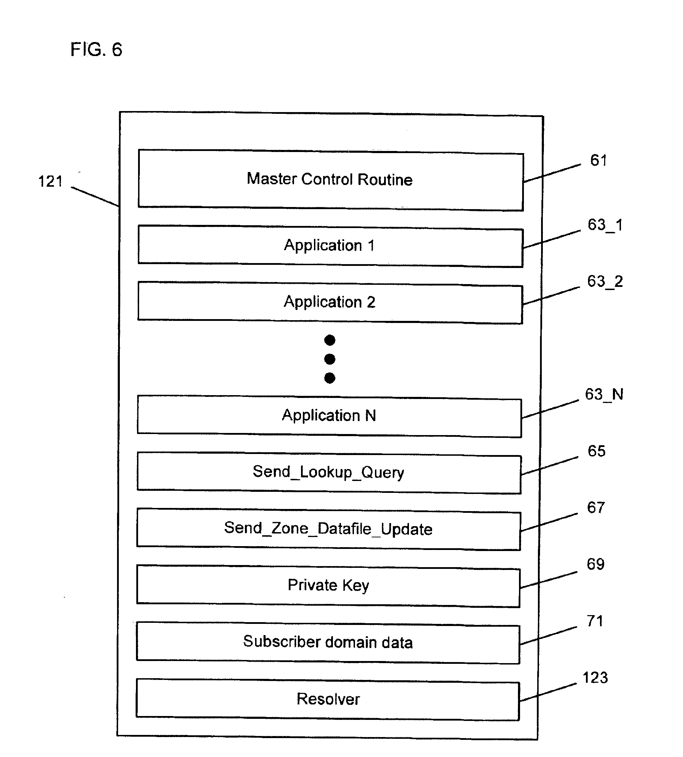

In this embodiment, as shown in Figure 6, the UICC card 3 stores a domain management module 121 which includes a resolver 123. Apart from the domain management module 121, the components of this embodiment are the same as those of the first embodiment and therefore will not be described in detail again.

The main advantage of including the resolver 123 in the domain management module 121 is that the resolver will cache retrieved data for a period of time (the "time to live" (TTL)) specified in the zone datafile. Accordingly, if the TTL has not expired, the cached data may be directly used and there is no need to send a wireless signal via the wireless communication network to retrieve the required data.

### MODIFICATIONS AND OTHER EMBODIMENTS

In the first embodiment, it is described how a domain management module stored by a UICC card stores domain information for a .tel domain in which a zone datafile stores contact information for a subscriber to a mobile communications network. It will be appreciated that a .tel domain is not the only type of domain that can store such contact information. For example, in an alternative embodiment, the operator of a mobile communications network may have a domain namespace and assign a respective sub-domain of that domain namespace to each subscriber of the mobile communications network. In the zone datafile associated with the sub-domain for a subscriber, contact information for that subscriber may be stored.

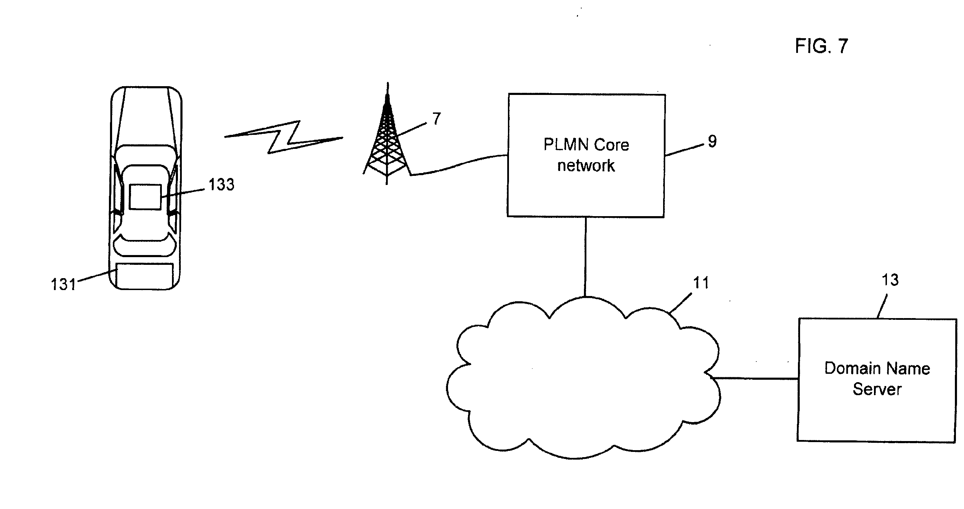

In the above-described embodiments, a domain management module stored by a UICC card for a cellular phone is linked to a domain. There are, however, other situations in which it is advantageous to link a domain management module in a smart card to a domain. Figure 7 shows an embodiment in which a smart card having a domain management module is included in a car 131, and the car 131 has an aerial 133 for communicating with base station of a wireless communication network, and via the wireless communication network a DNS server connected to the Internet. Each driver of the car may have a smart card storing a domain management module, and the insertion of a smart card into the car is required for the car to start. There are a number of applications for which such an arrangement is advantageous. For example:
- The DNS nameserver may store details of the car insurance covering the driver. The domain management module then provides a mechanism by which insurance information may be readily retrieved.
- The DNS nameserver may store contact information for a car recovery service subscribed to by the driver. The domain management module then provides a mechanism by which the car recovery service may be contacted in the event of a breakdown. In a preferred arrangement, the car has an application which may be triggered, either automatically (for example, in response to inflation of an airbag) or manually, in the event of an accident and automatically sends telemetry data to the car recovery service.
- The DNS nameserver may store mileage information for the driver, with the car including an application which periodically updates the mileage information stored by the DNS nameserver.

Another situation in which it is advantageous to store a domain management module in a smart card is in a building with an intelligent building management system that allows a control centre within the building to communicate with a DNS nameserver via a wireless communication system. The DNS nameserver could store contact information for utility providers, such as electricity and water.

While in the above embodiments, the wireless communications network is a PLMN, it will be appreciated that the invention could also apply to other types of wireless networks, e.g. using satellite communications.

In the first exemplary application of the first embodiment, the domain management module monitors the MCC to determine if a change in location has taken place. It will be appreciated that in an alternative embodiment, the cellular phone may include a positioning device, such as a GPS receiver, for determining the position of the cellular phone.

In the embodiments described above, the subscriber domain data is stored as part of the domain management module. In an alternative embodiment, the domain data is stored as a new Elementary File (EF) in a subscriber identity module.

The invention provides a domain management module in a smart card associated with the use of a communication system. This domain management module facilitates the retrieval or modification of domain data from a domain associated with the owner of the smart card via the communication system. The domain data may be resource records stored by a domain name system server or web page data (e.g. HTML data, rich media data or text data) stored by a web server. As discussed above, the management of web page data may be performed using WCMS software. There is no need for a web browser, thereby providing for faster and less expensive web management. The WCMS software may be stored directly on the smart card, and may interact with web page data either automatically or in response to a manual input.

It will be appreciated by those skilled in the art that a zone datafile may be replicated over several domain name system servers. Typically, a primary nameserver (sometimes called a master nameserver) holds an authoritative zone datafile, and copies of the authoritative zone datafile are maintained by one or more secondary nameservers (sometimes called slave nameservers). Periodically, the secondary nameservers check whether the zone datafile in the primary nameserver has been modified, and if so replicates the modifications.

The embodiments comprise computer apparatus (including cellular phones) and involves processes performed in the computer apparatus. The invention also extends to computer programs, particularly computer programs on or in a carrier, adapted for putting the invention into practice. The program may be in the form of source code, object code, a code intermediate to source code and object code such as in partially compiled form, or in any other form suitable for using in the implementation of the processes according to the invention.

Although in the described embodiment the invention is implemented by software, it will be appreciated that alternatively the invention could be implemented by hardware devices or a combination of hardware devices and software.

## Claims

1. A smart card comprising:
data memory;
one or more processors operable to execute programs stored in the data memory; and
an interface for receiving data from and transmitting data to a host device, wherein the data memory stores a subscriber identification module for authenticating a subscriber of a wireless communications network,
**characterized in that** the data memory further comprises a domain management module operable to generate management signals, either manually or automatically, operable to perform at least one of i) retrieving information from the resource records from a domain name server or web page data for a domain associated with the subscriber and ii) modifying the resource records stored by the domain name server or web page data for the domain associated with the subscriber.

2. A smart card according to claim 1, wherein the domain management module is operable to generate management signals for interacting with resource records stored by the domain name server.

3. A smart card according to claim 1 or 2, wherein the smart card is a Universal Integrated Circuit Card.

4. A smart card according to any preceding claim, wherein the subscriber identification module is operable to authenticate a subscriber or guest of a public land mobile network.

5. A smart card according to any preceding claim, wherein the domain management module is operable to initiate generation of a network signal automatically in response to data received from the host device, the content of the network signal depending on said received data.

6. A smart card according to any preceding claim, wherein the domain management module is operable to initiate generation of a network signal conveying a request for data stored in a NAPTR resource record for the domain associated with the subscriber.

7. A smart card according to any preceding claim, wherein in response to receipt of location information from the host device, the domain management module is operable to initiate generation of a network signal for updating a LOC resource record in accordance with said received location information.

8. A smart card according to any preceding claim, wherein the domain management module is operable to access contact data for the subscriber, said contact data comprising plural contact details, and wherein the domain management module is operable to initiate generation of a network signal for publishing at least one of said contact details in the resource records associated with the subscriber.

9. A smart card according to any preceding claim, further comprising a resolver for processing DNS queries.

10. A mobile communication device comprising:
a smart card as claimed in any preceding claim; and
a user interface,
wherein the domain management module is operable to generate a network signal in response to receipt of a user command by the user interface.

11. A mobile communication device comprising:
a smart card as claimed in claim 7; and
a positioning device operable to generate location information for the position of the mobile communication device.

12. A networked system comprising:
a smart card according to any of claims 1 to 9; and
a domain name server storing a zone datafile comprising the resource records for said domain associated with said subscriber.

13. A networked system comprising:
a smart card according to any of claims 1 to 9; and
a web server storing content comprising html-based or other data type web page data for said domain associated with said subscriber.
